(19) Europäisches Patentamt / European Patent Office / Office européen des brevets

(11) **EP 2 863 708 A2**

(12) **EUROPEAN PATENT APPLICATION**

(43) Date of publication:
**22.04.2015 Bulletin 2015/17**

(51) Int Cl.:
**H05B 33/08** (2006.01)

(21) Application number: **14156285.0**

(22) Date of filing: **24.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.09.2013 JP 2013202791**

(71) Applicant: **Toshiba Lighting & Technology Corporation**
**Yokosuka-shi**
**Kanagawa 237-8510 (JP)**

(72) Inventors:
• **Kato, Go**
  **Kanagawa 237-8510 (JP)**
• **Matsumoto, Shinichiro**
  **Kanagawa 237-8510 (JP)**

(74) Representative: **Bokinge, Ole**
**Awapatent AB**
**Junkersgatan 1**
**582 35 Linköping (SE)**

(54) **Power supply circuit and luminaire**

(57) According to an embodiment, there is provided a power supply circuit (14, 104, 114, 124, 134, 144) including a bridge circuit (24), a transformer (25), and a rectifying and smoothing circuit (26). The bridge circuit (24) includes at least one switching element (51, 52) and converts a direct-current voltage into an alternating-current voltage according to ON and OFF of the switching element (51, 52). The transformer (25) includes a primary winding wire (55) connected to the bridge circuit (24) and a secondary winding wire (56, 57) magnetically coupled to the primary winding wire (55). The rectifying and smoothing circuit (26) converts the alternating-current voltage output from the secondary winding wire (56, 57) into a direct-current output voltage and supplies the direct-current output voltage to a direct-current load (12). When a number of turns of the primary winding wire (55) is represented as N1, a number of turns of the secondary winding wire (56, 57) is represented as N2, a voltage value of the direct-current voltage supplied to the bridge circuit (24) is represented as VDC, and a lower limit value of the output voltage is represented as Vmin, a turn ratio of the primary winding wire (55) and the secondary winding wire (56, 57) is about N1:N2=(VDC/2):Vmin.

FIG. 1

**Description**

<u>FIELD</u>

Embodiments described herein relate generally to a power supply circuit and a luminaire.

<u>BACKGROUND</u>

There is a power supply circuit that converts an input voltage into a predetermined output voltage and supplies the predetermined output voltage to a load. The power supply circuit is used in, for example, a luminaire including a light-emitting element such as a light-emitting diode (LED). For example, the power supply circuit supplies electric power to the light-emitting element and lights the light-emitting element. In the power supply circuit, a transformer is used to electrically insulate a primary side and a secondary side. In the power supply circuit, stable power supply is desired.

<u>BRIEF DESCRIPTION OF THE DRAWINGS</u>

FIG. 1 is a block diagram schematically showing a luminaire according to a first embodiment;
FIG. 2 is a graph schematically showing an example of characteristics of a power supply circuit according to the first embodiment;
FIGS. 3A to 3C are schematic diagrams showing a part and characteristics of a transformer;
FIGS. 4A and 4B are partial sectional views schematically showing a part of the luminaire according to the first embodiment;
FIG. 5 is a block diagram schematically showing a luminaire according to a second embodiment;
FIG. 6 is a block diagram schematically showing another luminaire according to the second embodiment;
FIG. 7 is a block diagram schematically showing a luminaire according to a third embodiment;
FIG. 8 is a graph schematically showing an example of the operation of a power supply circuit;
FIG. 9 is a block diagram schematically showing a feedback circuit;
FIG. 10 is a block diagram schematically showing a luminaire according to a fourth embodiment; and
FIG. 11 is a block diagram schematically showing a luminaire according to a fifth embodiment.

<u>DETAILED DESCRIPTION</u>

In general, according to one embodiment, there is provided a power supply circuit including a bridge circuit, a transformer, and a rectifying and smoothing circuit. The bridge circuit includes at least one switching element and converts a direct-current voltage into an alternating-current voltage according to ON and OFF of the switching element. The transformer includes a primary winding wire connected to the bridge circuit and a secondary winding wire magnetically coupled to the primary winding wire. The rectifying and smoothing circuit converts the alternating-current voltage output from the secondary winding wire into a direct-current output voltage and supplies the direct-current output voltage to a direct-current load. When the number of turns of the primary winding wire is represented as N1, the number of turns of the secondary winding wire is represented as N2, a voltage value of the direct-current voltage supplied to the bridge circuit is represented as VDC, and a lower limit value of the output voltage is represented as Vmin, a turn ratio of the primary winding wire and the secondary winding wire is about $N1:N2=(VDC/2):Vmin$.

According to another embodiment, there is provided a luminaire including a lighting load and a power supply circuit. The power supply circuit includes a bridge circuit, a transformer, and a rectifying and smoothing circuit. The bridge circuit includes at least one switching element and converts a direct-current voltage into an alternating-current voltage according to ON and OFF of the switching element. The transformer includes a primary winding wire connected to the bridge circuit and a secondary winding wire magnetically coupled to the primary winding wire. The rectifying and smoothing circuit converts the alternating-current voltage output from the secondary winding wire into a direct-current output voltage and supplies the direct-current output voltage to the lighting load. When the number of turns of the primary winding wire is represented as N1, the number of turns of the secondary winding wire is represented as N2, a voltage value of the direct-current voltage supplied to the bridge circuit is represented as VDC, and a lower limit value of the output voltage is represented as Vmin, a turn ratio of the primary winding wire and the secondary winding wire is about $N1:N2=(VDC/2):Vmin$.

Embodiments are explained below with reference to the drawings.

The drawings are schematic or conceptual. Relations between thicknesses and widths of sections, ratios of the sizes among the sections, and the like are not always the same as real ones. Even if the same sections are shown, dimensions and ratios of the sections may be shown differently depending on the drawings.

In this specification and the drawings, components same as the components already shown in the drawings and explained are denoted by the same reference numerals and signs and detailed explanation of the components is omitted as appropriate.

First Embodiment

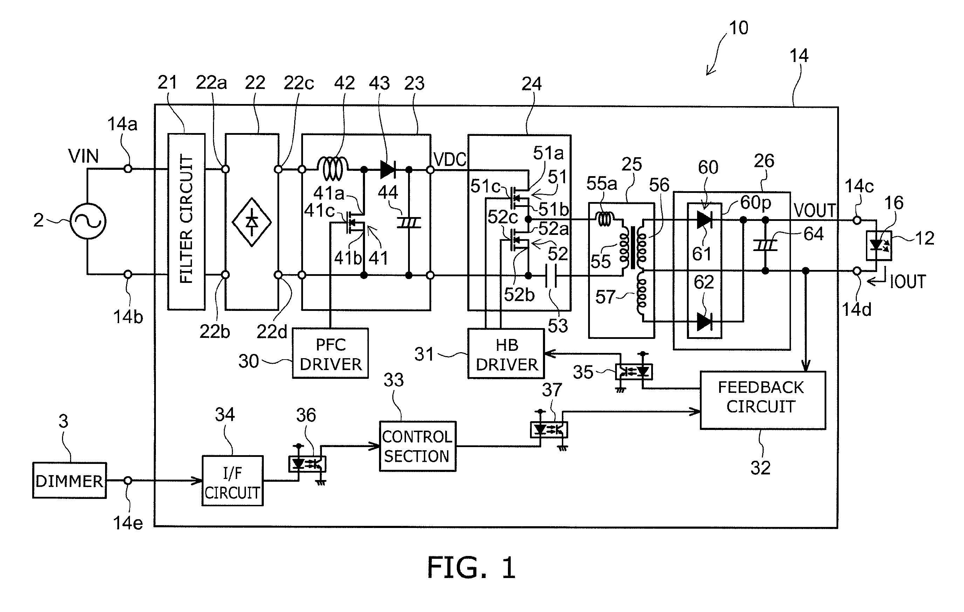

FIG. 1 is a block diagram schematically showing a luminaire according to a first embodiment.

As shown in FIG. 1, a luminaire 10 includes a lighting load 12 (a direct-current load) and a power supply circuit 14. The lighting load 12 includes an illumination light source 16 such as a light-emitting diode (LED). The illumination light source 16 may be, for example, an organic light-emitting diode (OLED). As the illumination light source 16, for example, a light-emitting element having a forward drop voltage is used. The lighting load 12 lights the illumination light source 16 according to application of an output voltage and supply of an output current from the power supply circuit 14. Values of the output voltage and the output current are specified according to the illumination light source 16.

The power supply circuit 14 includes a pair of power supply input terminals 14a and 14b and a pair of power supply output terminals 14c and 14d. An alternating-current power supply 2 is connected to the power supply input terminals 14a and 14b. The lighting load 12 is connected to the power supply output terminals 14c and 14d. In this specification, "connection" means electrical connection and includes physical non-connection and connection via other components.

The alternating-current power supply 2 is, for example, a commercial power supply. The power supply circuit 14 converts an alternating-current input voltage VIN supplied from the alternating-current power supply 2 into a direct-current output voltage VOUT and outputs the direct-current output voltage VOUT to the lighting load 12 to thereby light the illumination light source 16.

The potential of the power supply output terminal 14c is higher than the potential of the power supply output terminal 14d. For example, if the illumination light source 16 is an LED, an anode is connected to the power supply output terminal 14c and a cathode is connected to the power supply output terminal 14d. Consequently, a forward current flows to the illumination light source 16 and the illumination light source 16 is lit. In the following explanation, if the power supply output terminals 14c and 14d are distinguished, the power supply output terminal 14c is referred to as high-potential output terminal 14c and the power supply output terminal 14d is referred to as low-potential output terminal 14d.

The power supply circuit 14 includes a filter circuit 21, a rectifying circuit 22, a power-factor improving circuit 23, a half bridge circuit 24 (a bridge circuit), a transformer 25, and a rectifying and smoothing circuit 26.

The filter circuit 21 is connected to the power supply input terminals 14a and 14b. The filter circuit 21 includes, for example, an inductor and a capacitor. The filter circuit 21 suppresses noise included in the input voltage VIN supplied from the alternating-current power supply 2.

The rectifying circuit 22 includes input terminals 22a and 22b, a high potential terminal 22c, and a low potential terminal 22d. The input terminals 22a and 22b are connected to the filter circuit 21. The input voltage VIN, in which the noise is suppressed by the filter circuit 21, is input to the rectifying circuit 22. The filter circuit 21 is provided according to necessity and can be omitted. For example, the filter circuit 21 may be omitted and the rectifying circuit 22 may be connected to the power supply input terminals 14a and 14b.

The rectifying circuit 22 is, for example, a diode bridge. For example, the rectifying circuit 22 subjects the alternating-current input voltage VIN to full-wave rectification and generates a rectified voltage (e.g., an undulating voltage) after the full-wave rectification between the high potential terminal 22c and the low potential terminal 22d. The potential of the high potential terminal 22c is higher than the potential of the low potential terminal 22d. The potential of the low potential terminal 22d is, for example, ground potential or reference potential of the power supply circuit 14. The potential of the low potential terminal 22d may be arbitrary potential lower than the potential of the high potential terminal 22c. Rectification of the input voltage VIN by the rectifying circuit 22 may be half-wave rectification.

The power-factor improving circuit 23 is connected to the rectifying circuit 22. The power-factor improving circuit 23 suppresses, in the rectified voltage, generation of harmonics integer times as high as a power supply frequency. Consequently, the power-factor improving circuit 23 improves the power factor of the rectified voltage.

The power-factor improving circuit 23 includes, for example, a switching element 41, an inductor 42, a diode 43, and a capacitor 44. The switching element 41 includes electrodes 41a to 41c. One end of the inductor 42 is connected to the high potential terminal 22c. The other end of the inductor 42 is connected to the electrode 41a. The electrode 41b is connected to the low potential terminal 22d. An anode of the diode 43 is connected to the electrode 41a. A cathode of the diode 43 is connected to one end of the capacitor 44. The other end of the capacitor 44 is connected to the low potential terminal 22d. That is, in this example, the power-factor improving circuit 23 is a rising voltage chopper circuit. The power-factor improving circuit 23 is not limited to this and may be an arbitrary circuit that can improve the power factor of the rectified voltage.

For example, the power-factor improving circuit 23 causes the switching element 41 to perform switching and brings an input current close to a sine wave to thereby improve the power factor of the rectified voltage. The power-factor improving circuit 23 smoothes the rectified voltage after the power factor improvement with the capacitor 44 to thereby convert the rectified voltage into the direct-current voltage VDC. The power-factor improving circuit 23 converts, for example, the input voltage VIN of alternating 100 V (a root mean square value) into the direct-current voltage VDC of about 410 V. A value of the direct-current voltage VDC is not limited to this and may be an arbitrary value. The capacitor 44 is provided according to necessity and can be omitted. The power-factor improving circuit 23 may output, for example, the rectified voltage after the power factor improvement.

The half bridge circuit 24 includes switching elements 51 and 52 and a capacitor 53. The switching element 51 includes electrodes 51a to 51c. The electrode 51a is connected to a terminal on a high potential side of the capacitor 44. The electrode 51b is connected to an electrode 52a of the switching element 52. An electrode 52b is connected to the low potential terminal 22d. In this example, a direct-current voltage source is configured by the rectifying circuit 22 and the power-factor improving circuit 23. The switching elements 51 and 52 are connected to the direct-current voltage source in series. The direct-current voltage source is not limited to this and may be an arbitrary voltage source that can supply a direct-current voltage to the half bridge circuit 24.

The transformer 25 includes a primary winding wire 55 and secondary winding wires 56 and 57. The primary winding wire 55 is connected to the half bridge circuit 24. One end of the primary winding wire 55 is connected to the electrode 51b and the electrode 52a. That is, the one end of the primary winding wire 55 is connected between the two switching elements 51 and 52. The other end of the primary winding wire 55 is connected to the low potential terminal 22d via the capacitor 53. In this example, the capacitor 53 is connected between the primary winding wire 55 and the low potential terminal 22d. In other words, the capacitor 53 is connected between the primary winding wire 55 and the reference potential. The capacitor 53 may be connected, for example, between the electrode 51b and the primary winding wire 55.

The half bridge circuit 24 turns on the switching element 51 and turns off the switching element 52 to thereby charge the capacitor 53 via the primary winding wire 55. The half bridge circuit 24 turns off the switching element 51 and turns on the switching element 52 to thereby discharge the capacitor 53 via the primary wining wire 55. In this way, the half bridge circuit 24 alternately turns on and off the switching elements 51 and 52 to thereby generate an alternating current voltage at both ends of the primary winding wire 55. That is, the half bridge circuit 24 converts the direct-current voltage VDC supplied from the power-factor improving circuit 23 into an alternating-current voltage.

The switching elements 41, 51, and 52 are, for example, n-channel type FETs. For example, the electrodes 41a, 51a, and 52a are drains. The electrodes 41b, 51b, and 52b are sources. The electrodes 41c, 51c, and 52c are gates. The switching elements 41, 51, and 52 may be, for example, p-channel type FETs or may be bipolar transistors or HEMTs.

The secondary winding wires 56 and 57 are magnetically coupled to the primary winding wire 55. Therefore, when an alternating current flows to the primary winding wire 55, an alternating current corresponding to the alternating current flows to the secondary winding wires 56 and 57. Consequently, the transformer 25 transforms the alternating-current voltage supplied from the half bridge circuit 24. The transformer 25 steps down the alternating-current voltage supplied from the half bridge circuit 24.

By providing the transformer 25 and electrically insulating the primary side and the secondary side in this way, for example, it is possible to improve safety of the luminaire 10.

The secondary winding wire 57 is connected to the secondary winding wire 56 in series. A connection point of the secondary winding wires 56 and 57 is connected to the low potential terminal 22d by a not-shown wire. The connection point of the secondary winding wires 56 and 57 is set to potential substantially the same as the potential of the low potential terminal 22d. That is, the connection point of the secondary winding wires 56 and 57 is set to the reference potential.

The rectifying and smoothing circuit 26 includes a rectifying circuit 60 and a smoothing capacitor 64. The rectifying circuit 60 includes rectifying elements 61 and 62. The rectifying circuit 60 is, for example, one element in which two rectifying elements 61 and 62 are provided in one package 60p. The rectifying elements 61 and 62 are Schottky barrier diodes. The rectifying elements 61 and 62 may be other diodes.

An anode of the rectifying element 61 is connected to an end of the secondary winding wire 56 on the opposite side of the secondary winding wire 57. A cathode of the rectifying element 61 is connected to one end of the smoothing capacitor 64. An anode of the rectifying element 62 is connected to an end of the secondary winding wire 57 on the opposite side of the secondary winding wire 56. A cathode of the rectifying element 62 is connected to one end of the smoothing capacitor 64. The other end of the smoothing capacitor 64 is connected to the connection point of the secondary winding wires 56 and 57.

Consequently, the rectifying and smoothing circuit 26 rectifies the alternating-current voltage stepped down by the transformer 25 with the rectifying elements 61 and 62 and converts the alternating-current voltage into a rectified voltage. The rectifying and smoothing circuit 26 smoothes the rectified voltage with the smoothing capacitor 64 to thereby convert the rectified voltage into a direct-current voltage. That is, the rectifying and smoothing circuit 26 generates the output voltage VOUT.

The high-potential output terminal 14c is connected to a terminal on a high potential side of the smoothing capacitor 64. The low-potential output terminal 14d is connected to the connection point of the secondary winding wires 56 and 57. Consequently, the output voltage VOUT is output between the power supply output terminals 14c and 14d.

The power supply circuit 14 further includes a PFC (Power Factor Correction) driver 30 (a second driver), an HB (Half Bridge) driver 31 (a first driver), a feedback circuit 32, a control section 33, and an I/F (Interface) circuit 34.

The PFC driver 30 is connected to the electrode 41c of the switching element 41 of the power-factor improving circuit 23. For example, the PFC driver 30 inputs a predetermined PWM signal to the electrode 41c to thereby control ON and OFF of the switching element 41. That is, the PFC driver 30 controls generation of the direct-current voltage VDC by the power-factor improving circuit 23.

The HB driver 31 is connected to the electrode 51c of the switching element 51 and the electrode 52c of the switching element 52 of the half bridge circuit 24. For example, the HB driver 31 inputs a predetermined PWM signal to the electrodes 51c and 52c to thereby control ON and OFF of the switching elements 51 and 52. That is, the HB driver 31 controls the conversion of the direct-current voltage VDC into the alternating-current voltage by the half bridge circuit 24.

A duty ratio of the PWM signal input to the electrodes 51c and 52c is 50%. ON timing of the PWM signal input to the electrode 52c is opposite to ON timing of the PWM signal input to the electrode 51c. Therefore, the switching elements 51 and 52 are alternately turned on and off. The HB driver 31 controls the frequencies of the PWM signals input to the electrodes 51c and 52c. Consequently, it is possible to control a voltage value of the alternating-current voltage generated in the transformer 25.

The feedback circuit 32 is connected to the low-potential output terminal 14d. The feedback circuit 32 may be connected to the high-potential output terminal 14c. The feedback circuit 32 detects at least one of the output voltage VOUT and an output current IOUT flowing to the lighting load 12. The feedback circuit 32 feedback-controls the HB driver 31 on the basis of at least one of the output voltage VOUT and the output current IOUT.

If a light-emitting element such as an LED is used in the illumination light source 16, the voltage of the illumination light source 16 is substantially fixed according to a forward drop voltage. Therefore, if the light-emitting element such as the LED is used in the illumination light source 16, by connecting the feedback circuit 32 to the low-potential output terminal 14d, it is possible to appropriately detect an electric current flowing to the illumination light source 16.

The feedback circuit 32 includes, for example, a differential amplifier circuit. A reference voltage is input to one input of the differential amplifier circuit. A detection voltage of the output voltage VOUT or the output current IOUT is input to the other input of the differential amplifier circuit. The differential amplifier circuit outputs a voltage corresponding to a difference between the reference voltage and the detection voltage.

The feedback circuit 32 inputs the output voltage of the differential amplifier circuit to the HB driver 31 as a feedback signal. The HB driver 31 changes, according to the feedback signal from the feedback circuit 32, ON and OFF frequencies of the switching elements 51 and 52. Consequently, for example, the HB driver 31 and the feedback circuit 32 substantially fix the output current IOUT. For example, application of an overvoltage to the lighting load 12 and supply of an overcurrent to the lighting load 12 are suppressed.

A photo coupler 35 is provided between the HB driver 31 and the feedback circuit 32. The photo coupler 35 includes a light emitting section and a light receiving section. The photo coupler 35 converts an electric signal input from the feedback circuit 32 into light once, returns the light into the electric signal, and inputs the electric signal to the HB driver 31. Consequently, it is possible to electrically insulate the HB driver 31 and the feedback circuit 32. For example, it is possible to more appropriately insulate the primary side and the secondary side.

The power supply circuit 14 includes a signal input terminal 14e. A dimmer 3 is connected to the signal input terminal 14e. The dimmer 3 includes, for example, an operating section and inputs a PWM signal corresponding to operation of the operating section to the power supply circuit 14 as a dimming signal. The dimmer 3 is attached to, for example, a wall in a room and used.

The I/F circuit 34 is connected to the signal input terminal 14e. The I/F circuit 34 outputs the dimming signal input from the dimmer 3 to the control section 33. A photo coupler 36 is provided between the control section 33 and the I/F circuit 34. Consequently, the control section 33 and the I/F circuit 34 are electrically insulated. For example, it is possible to more appropriately insulate the primary side and the secondary side.

For example, the control section 33 converts the dimming signal input from the I/F circuit 34 into a dimming signal of a form corresponding to the feedback circuit 32 and inputs the converted dimming signal to the feedback circuit 32. The control section 33 may directly input a signal input from the dimmer 3 to the feedback circuit 32. At least any one of the PFC driver 30, the HB driver 31, the feedback circuit 32, and the control section 33 includes a semiconductor element that can be controlled by software. For example, microprocessors are used as the PFC driver 30, the HB driver 31, the feedback circuit 32, and the control section 33.

A photo coupler 37 is provided between the feedback circuit 32 and the control section 33. Consequently, the feedback circuit 32 and the control section 33 are electrically insulated. For example, it is possible to more appropriately insulate the primary side and the secondary side.

The feedback circuit 32 changes, according to the dimming signal input from the control section 33, the reference voltage input to the differential amplifier circuit. For example, the feedback circuit 32 inputs a direct-current voltage obtained by smoothing the dimming signal, which is the PWM signal, with a capacitor to the differential amplifier circuit as the reference voltage. A voltage level of the reference voltage is set according to a voltage level of the detection voltage. More specifically, a voltage level of the dimming signal corresponding to a desired dimming degree is set to be substantially the same as a voltage level of the detection voltage obtained when the illumination light source 16 emits light at brightness corresponding to the dimming degree.

The feedback circuit 32 changes, according to the dimming signal, the feedback signal input to the HB driver 31. The HB driver 31 changes the ON and OFF frequencies of the switching elements 51 and 52 according to the feedback signal from the feedback circuit 32. In this way, the HB driver 31 controls a switching frequency of the switching elements 51 and 52 to thereby adjust the output voltage VOUT from a rated output state for obtaining a predetermined luminous flux to a substantially dimming lower limit state.

Consequently, the power supply circuit 14 lights the lighting load 12 at brightness corresponding to the dimming degree set by the dimmer 3. In this way, the power supply circuit 14 converts the alternating-current input voltage VIN supplied from the alternating-current power supply 2 into the direct-current output voltage VOUT and supplies the output voltage VOUT to the lighting load 12 and at the same time dims the lighting load 12 to brightness corresponding to the dimming degree set by the dimmer 3. The luminaire 10 can light the lighting load 12 at arbitrary brightness.

The transformer 25 includes a leak inductance 55a. In FIG. 1, for convenience, the leak inductance 55a is shown as being separated from the primary winding wire 55. However, actually, the leak inductance 55a is a part of the transformer 25. As shown in the figure, the leak inductance 55a is represented as an inductor connected to the primary winding wire 55 in series.

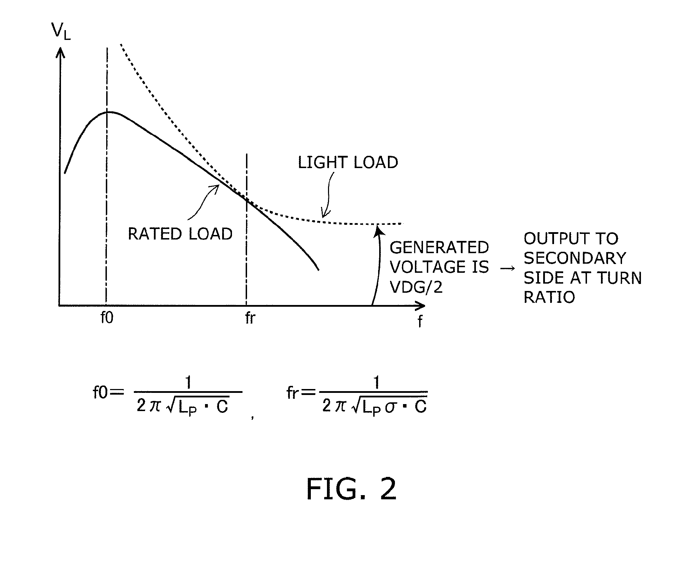

FIG. 2 is a graph schematically showing an example of characteristics of the power supply circuit according to the first embodiment.

The abscissa of FIG. 2 indicates a resonant frequency f of a resonant circuit. The ordinate of FIG. 2 indicates a voltage $V_L$ generated at both the ends of the primary winding wire 55.

In the power supply circuit 14, the resonant circuit is configured by the transformer 25 and the capacitor 53. Specifically, a so-called LLC resonant circuit is configured by the primary winding wire 55, the leak inductance 55a, and the capacitor 53. A resonant frequency is determined by the primary winding wire 55, the leak inductance 55a, and the capacitor 53. Therefore, the voltage $V_L$ generated on the primary side of the transformer 25 is as shown in FIG. 2. Therefore, by controlling the switching frequency of the switching elements 51 and 52, it is possible to control electric power supplied to the lighting load 12.

In the transformer 25, a turn ratio of the primary winding wire 55 and the secondary winding wires 56 and 57 is set to about N1:N2=(VDC/2):Vmin. N1 represents the number of turns of the primary winding wire 55. N2 represents the number of turns of the secondary winding wires 56 and 57. VDC represents a direct-current voltage supplied to the half bridge circuit 24. Vmin represents a lower limit value (hereinafter referred to as lower limit voltage Vmin) of the output voltage VOUT. For example, if the illumination light source 16 is a light-emitting element having a forward drop voltage such as an LED, the lower limit voltage Vmin is the forward drop voltage (a minimum voltage for light emission).

That is, in the transformer 25, the turn ratio of the primary winding wire 55 and the secondary winding wires 56 and 57 is set such that an alternating-current voltage appearing on the secondary side is about the lower limit voltage Vmin. For example, if a direct-current voltage of about VDC=410 V is supplied to the half bridge circuit 24 and the transformer 25 with respect to a load of about Vmin=20V, the turn ratio is set to about N1:N2=200T:19T.

More specifically, the number of turns N2 of the secondary winding wires 56 and 57 satisfies the following Expression (1):

$$\left(\frac{V\min \cdot N1}{(VDC/2)}\right) \times 0.8 \le N2 \le \left(\frac{V\min \cdot N1}{(VDC/2)}\right) \times 1.2$$

In this way, the number of turns N2 is set to be equal to or larger than 0.8 times and equal to or smaller than 1.2 times of (Vmin·N1)/(VDC/2). Preferably, the number of turns N2 is set to be equal to or larger than 0.9 times and equal to or smaller than 1.1 times of (Vmin·N1)/(VDC/2). More preferably, the number of turns N2 is set to (Vmin·N1)/(VDC/2).

As shown in FIG. 2, for example, the output voltage VOUT during a light load depends on a turn ratio of the transformer 25. As shown in FIG. 2, the output voltage VOUT (the voltage $V_L$) is inversely proportional to the switching frequency f of the switching elements 51 and 52. As the switching frequency f is increased, the output voltage VOUT decreases. However, the output voltage VOUT converges at a predetermined voltage value. Even if the switching frequency f is increased, the output voltage VOUT does not fall below the predetermined value. Therefore, for example, if the turn ratio of the transformer 25 is not set as explained above, in dimming control, the output voltage VOUT sometimes cannot be reduced to the lower limit voltage Vmin.

In the power supply circuit 14 according to this embodiment, the turn ratio of the transformer 25 is set as explained above. Consequently, it is possible to appropriately reduce the output voltage VOUT to the lower limit voltage Vmin according to only frequency control of the switching elements 51 and 52. For example, it is possible to appropriately perform the dimming control from full light to a dimming degree of about 5%.

For example, there is a power supply circuit that changes a duty ratio of switching of a bridge circuit and causes switching elements to intermittently operate in order to reduce the output voltage VOUT to the lower limit voltage Vmin. However, in this case, an output current becomes intermittent and ripple noise occurs in the output current.

On the other hand, in the power supply circuit 14 according to this embodiment, the output voltage VOUT can be appropriately controlled by only the switching frequency. That is, in a state in which the duty ratio of the PWM signal input to the switching elements 51 and 52 is set to 50% and the switching elements 51 and 52 are caused to continuously operate, the output voltage VOUT can be appropriately controlled. Consequently, it is possible to suppress the occurrence of the ripple noise. In this way, in the power supply circuit 14 and the luminaire 10 according to this embodiment, it is possible to supply stable electric power to the lighting load 12.

In the power supply circuit 14, when the inductance of the primary winding wire 55 is represented as Lp and the leak inductance 55a of the transformer 25 is represented as Lpσ, Lp is set larger than Lpσ and a difference between Lp and Lpσ is reduced. If a value of a coupling coefficient represented by $\sqrt{(1-Lp\sigma/Lp)}$ is set to be equal to or larger than 0.8 and equal to or smaller than 0.9, Lpσ/Lp is equal to or larger than 0.19 and equal to or smaller than 0.36. Consequently, for example, it is possible to set a range of a switching frequency to be controlled small. A difference Lp-Lpσ between Lp and Lpσ is, for example, equal to or larger than 5 mH and equal to or smaller than 10 mH.

In the power supply circuit 14, for example, Lp is set to be equal to or larger than 5 mH and equal to or smaller than 15 mH. The capacitance of the capacitor 53 is set to be equal to or larger than 100 pF and equal to or smaller than 10000 pF. In this way, the mutual inductance of the primary winding wire 55 is set relatively large and the capacitance of the capacitor 53 is set relatively small. Consequently, it is possible to reduce a reactive current in the resonant circuit of the transformer 25 and the capacitor 53 and improve power conversion efficiency.

In the power supply circuit 14, Schottky barrier diodes are used in the rectifying elements 61 and 62. Consequently, for example, it is possible to suppress a voltage drop in the rectifying elements 61 and 62. For example, it is possible to suppress heat generation in the rectifying elements 61 and 62.

In the power supply circuit 14, the rectifying circuit 60 is used in which the rectifying elements 61 and 62 are provided in one package 60p. Consequently, for example, it is possible to suppress fluctuation in forward drop voltages of the rectifying elements 61 and 62. For example, it is possible to suppress imbalance of electric currents flowing to the rectifying elements 61 and 62. For example, it is possible to suppress deterioration in power conversion efficiency.

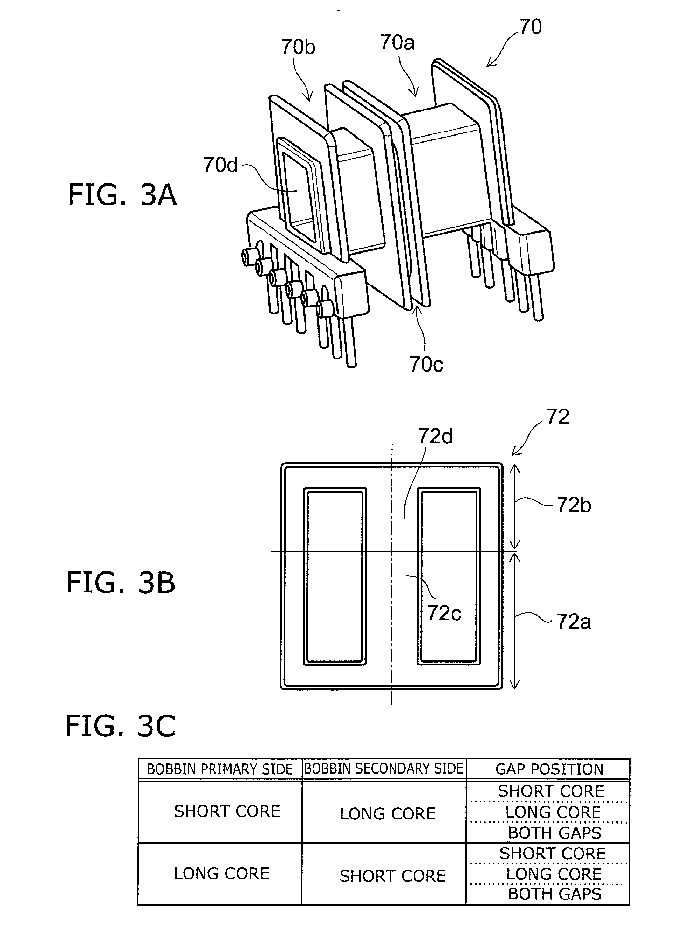

FIGS. 3A to 3C are schematic diagrams showing a part and characteristics of the transformer.

FIG. 3A is a schematic diagram showing a bobbin 70 used in the transformer 25. FIG. 3B is a plan view schematically showing a core 72 used in the transformer 25. FIG. 3C is a graph showing gap positions on the primary side and the secondary side of the transformer 25.

As shown in FIG. 3A, the bobbin 70 includes a primary-side winding section 70a, a secondary-side winding section 70b, and a barrier section 70c. In the bobbin 70, a through-hole 70d for inserting through a part of the core 72 is provided.

The primary winding wire 55 is provided in the primary-side winding section 70a. The secondary winding wires 56 and 57 are provided in the secondary-side winding section 70b. The barrier section 70c is provided between the primary-side winding section 70a and the secondary-side winding section 70b and separates the primary-side winding section 70a and the secondary-side winding section 70b. For example, an insulative resin material is used for the barrier section 70c.

In this way, in the transformer 25, the bobbin 70 in which the primary side and the secondary side are separated by the barrier section 70c is used. Consequently, coupling of the primary side and the secondary side is weakened. For example, the value of the coupling coefficient represented by $\sqrt{(1-Lp\sigma/Lp)}$ can be reduced to be equal to or larger than 0.8 and equal to or smaller than 0.9. Consequently, it is possible to increase the leak inductance 55a of the transformer 25. For example, it is possible to make it easy to adjust the value of Lpσ.

As shown in FIG. 3B, the core 72 includes a long core section 72a and a short core section 72b. In this way, the core 72 has an asymmetrical shape. The core 72 is a so-called EE core. The long core section 72a includes a center section 72c. The short core section 72b includes a center section 72d. The center sections 72c and 72d are inserted through the through-hole 70d of the bobbin 70, whereby the core 72 is attached to the bobbin 70. In this example, the long core section 72a is the primary side and the short core section 72b is the secondary side.

As shown in FIG. 3C, by using the core 72 having the asymmetrical shape, for example, it is possible to provide a plurality of settings of winding wire winding positions and gap positions on the primary side and the secondary side.

Therefore, besides the leak inductance 55a determined by a bobbin structure, it is possible to set leak inductance by the gap positions. Therefore, for example, it is possible to further increase the value of Lpσ. For example, it is possible to make it easier to adjust the value of Lpσ.

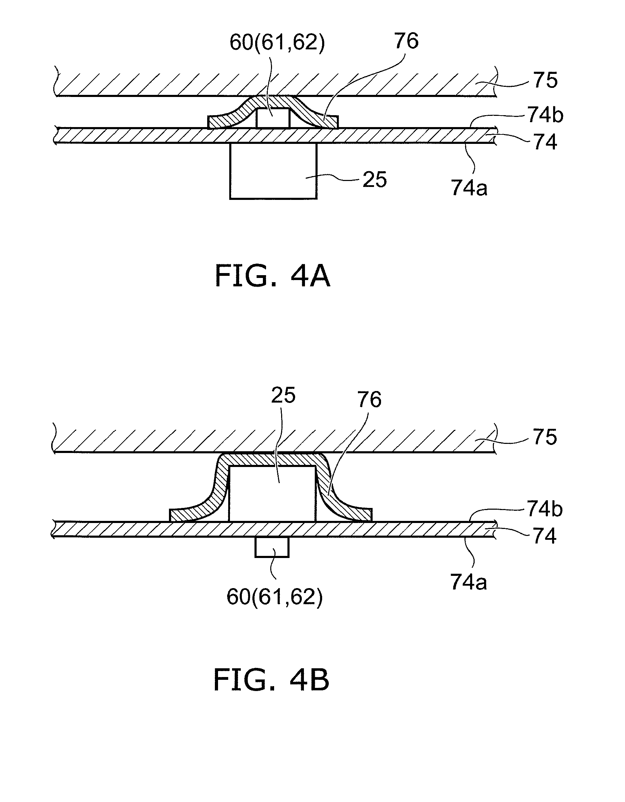

FIGS. 4A and 4B are partial sectional views schematically showing a part of the luminaire according to the first embodiment.

As shown in FIGS. 4A and 4B, the power supply circuit 14 further includes a substrate 74, a housing 75, and a thermal radiator 76.

The components of the lighting load 12 and the power supply circuit 14 are mounted on the substrate 74. The substrate 74 includes a not-shown wiring layer and wires the components of the lighting load 12 and the power supply circuit 14. The substrate 74 is a so-called printed wiring board.

The housing 75 supports the substrate 74 and the like. A material having high heat conductivity is used for the housing 75. For example, a metal material such as aluminum, stainless steel, or iron is used for the housing 75.

The substrate 74 includes a first surface 74a and a second surface 74b. The second surface 74b is a surface on the opposite side of the first surface 74a. The transformer 25 is provided on the first surface 74a. The rectifying circuit 60 is provided on the second surface 74b and arranged in a position opposed to the transformer 25. That is, the rectifying elements 61 and 62 are provided on the second surface 74b and arranged in the position opposed to the transformer 25. Consequently, for example, the transformer 25 and the rectifying elements 61 and 62, which are heat generating components, are thermally coupled to each other via the substrate 74.

As shown in FIG. 4A, the thermal radiator 76 is provided between the rectifying circuit 60 and the housing 75. The thermal radiator 76 is thermally coupled to the rectifying circuit 60 and thermally coupled to the housing 75. For example, the thermal radiator 76 is in contact with the rectifying circuit 60 and in contact with the housing 75. As the thermal radiator 76, for example, a thermal radiation sheet is used. The thermal radiator 76 is, for example, a silicone seat. The thermal radiator 76 may be, for example, a heat sink formed of a metal material or the like. "Thermally coupled" includes, besides direct coupling, coupling via another element such as thermal radiation grease.

The transformer 25, the rectifying circuit 60, and the thermal radiator 76 are arranged as explained. Consequently, it is possible to allow heat generated in the transformer 25 and the rectifying circuit 60 to escape to the housing 75 and the like using one thermal radiator 76. For example, compared with a case of providing a thermal radiator in each of the transformer 25 and the rectifying circuit 60, it is possible to suppress costs of the luminaire 10.

As shown in FIG. 4B, the thermal radiator 76 may be provided between the transformer 25 and the housing 75. The thermal radiator 76 may be thermally coupled to the transformer 25 and the housing 75. The thermal radiator 76 only has to be thermally coupled to at least one of the transformer 25 and the rectifying circuit 60.


Second Embodiment

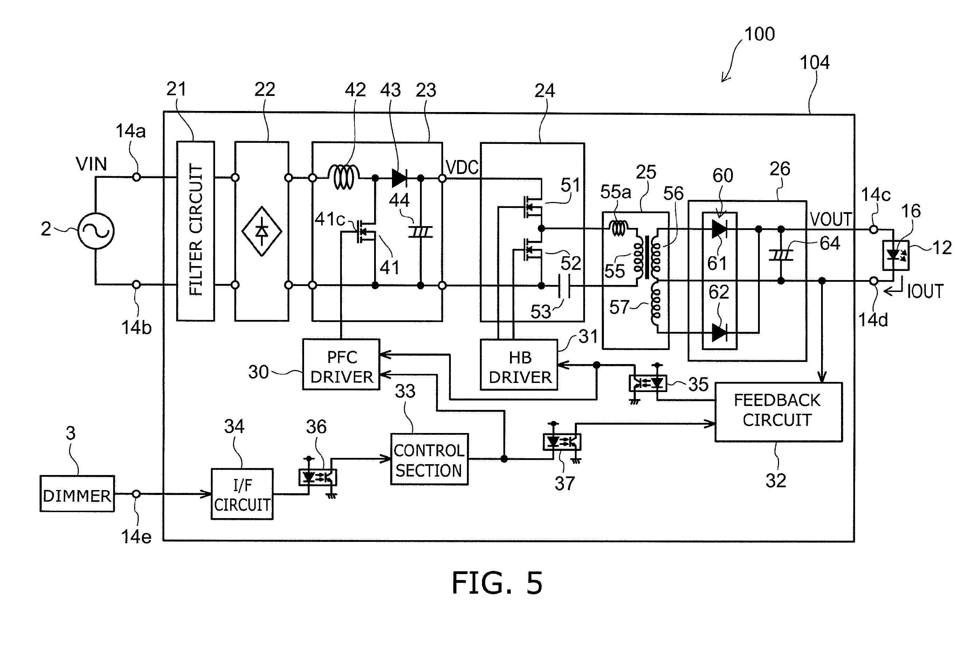

FIG. 5 is a block diagram schematically showing a luminaire according to a second embodiment.

Components same as the components in the first embodiment in terms of functions and configurations are denoted by the same reference numerals and signs and detailed explanation of the components is omitted.

As shown in FIG. 5, in a power supply circuit 104 of a luminaire 100, a feedback signal from the feedback circuit 32 and a dimming signal from the control section 33 are input to the PFC driver 30 as well. A signal input to the PFC driver 30 may be one of the feedback signal and the dimming signal.

The PFC deriver 30 changes, according to the feedback signal and the dimming signal, at least one of a frequency and a duty ratio of a pulse signal input to the electrode 41c of the switching element 41 of the power-factor improving circuit 23. Consequently, the PFC driver 30 changes a voltage value of the direct-current voltage VDC according to the feedback signal and the dimming signal.

For example, if dimming is performed by the half bridge circuit 24 and the transformer 25, it is necessary to control a switching frequency of the switching elements 51 and 52 to be higher as the dimming is closer to a lower limit. On the other hand, if the switching frequency is high, an increase in a switching loss is caused and power conversion efficiency is deteriorated.

The power supply circuit 104 detects a dimming level and changes a setting value of the direct-current voltage VDC. Consequently, for example, it is possible to cause the half bridge circuit 24 to operate at a lower switching frequency. For example, it is possible to suppress the deterioration in the power conversion efficiency.

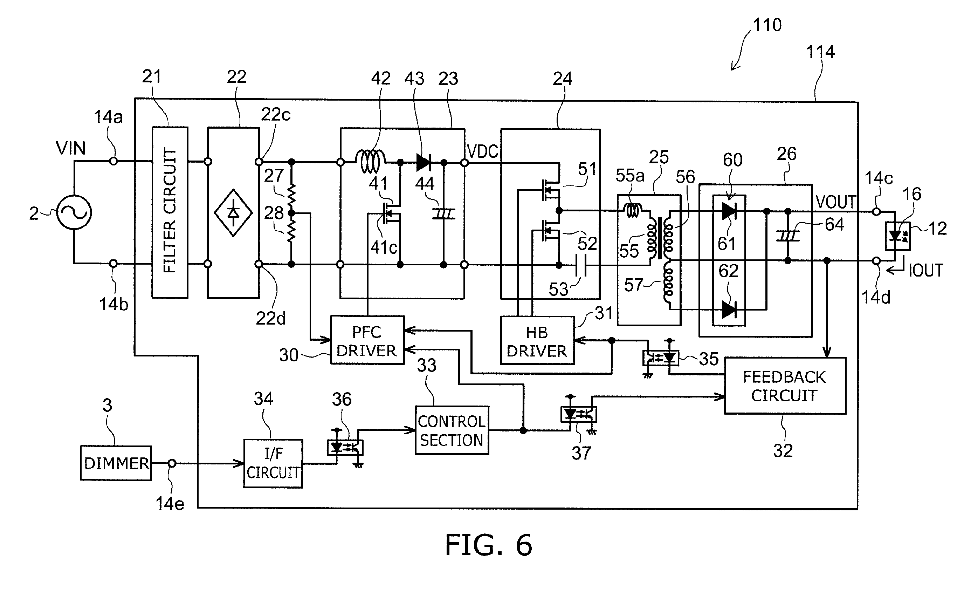

FIG. 6 is a block diagram schematically showing another luminaire according to the second embodiment.

As shown in FIG. 6, a power supply circuit 114 of a luminaire 110 includes resistors 27 and 28. The resistors 27 and 28 are connected in series between the high potential terminal 22c and the low potential terminal 22d of the rectifying circuit 22. In the power supply circuit 114, the PFC driver 30 is connected to a connection point of the resistors 27 and 28. Consequently, a voltage obtained by dividing, in the resistors 27 and 28, a rectified voltage output from the rectifying circuit 22 is input to the PFC driver 30 as a detection voltage of the input voltage VIN.

The PFC driver 30 detects a voltage value of the input voltage VIN on the basis of the detection voltage and changes, according to a result of the detection, at least one of a frequency and a duty ratio of a pulse signal input to the electrode 41c of the switching element 41 of the power-factor improving circuit 23. The detection voltage may be input to the PFC driver 30 from, for example, the control section 33.

As a boosting rate is lower, conversion efficiency of the rising voltage chopper circuit of the power-factor improving circuit 23 is higher and, as an input current is higher, the conversion efficiency is lower. Therefore, if the input voltage VIN is 100 V (a root mean square value), overall conversion efficiency is lower than overall conversion efficiency obtained when the input voltage VIN is 200 V (a root mean square value).

For example, the power supply circuit 114 detects the input voltage VIN and, if the input voltage VIN is 100 V, reduces the direct-current voltage VDC. Consequently, it is possible to suppress the deterioration in the conversion efficiency.

Third Embodiment

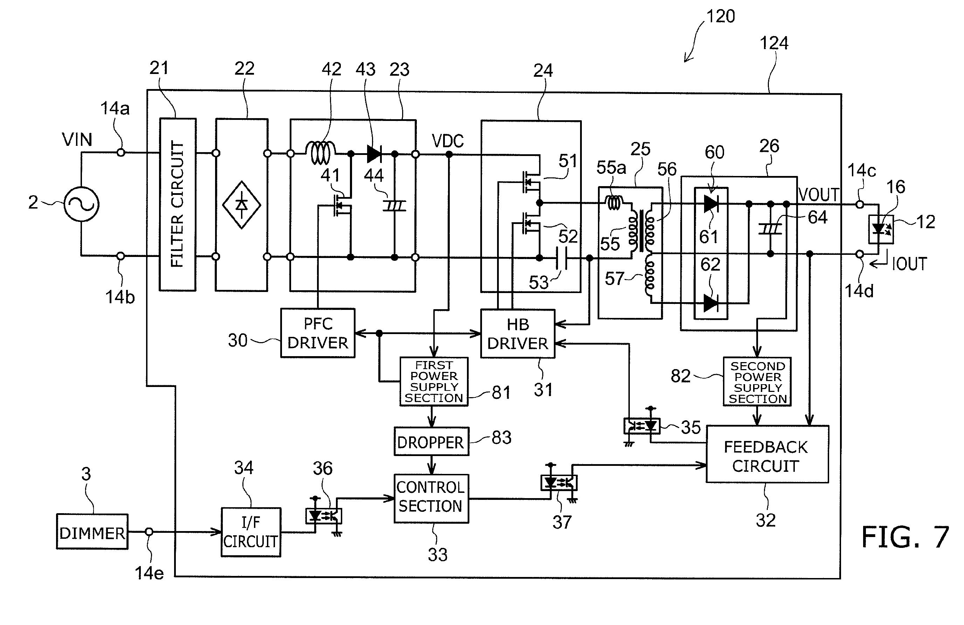

FIG. 7 is a block diagram schematically showing a luminaire according to a third embodiment.

As shown in FIG. 7, a power supply circuit 124 of a luminaire 120 further includes a first power supply section 81, a second power supply section 82, and a dropper 83.

The first power supply section 81 is connected to an output of the power-factor improving circuit 23. Consequently, the direct-current voltage VDC is input to the first power supply section 81. For example, the first power supply section 81 steps down the direct-current voltage VDC to thereby generate a driving voltage corresponding to the PFC driver 30 and the HB driver 31 from the direct-current voltage VDC. For example, the first power supply section 81 generates a driving voltage of 15 V from the direct-current voltage VDC of 410 V. The first power supply section 81 supplies the generated driving voltage to the PFC driver 30 and the HB driver 31. The PFC driver 30 and the HB driver 31 start operations according to the supply of the driving voltage from the first power supply section 81.

The dropper 83 is connected to the control section 33 and the first power supply section 81. The dropper 83 steps down the driving voltage input from the first power supply section 81 and converts the driving voltage into a driving voltage corresponding to the control section 33. The dropper 83 supplies the driving voltage after the conversion to the control section 33. For example, the dropper 83 converts a driving voltage of 15 V into a driving voltage of 5 V and supplies the driving voltage of 5 V to the control section 33. The control section 33 starts an operation according to the supply of the driving voltage from the dropper 83.

The second power supply section 82 is connected to the terminal on the high potential side of the smoothing capacitor 64. Consequently, the output voltage VOUT is input to the second power supply section 82. For example, the second power supply section 82 steps down the output voltage VOUT to thereby generate a driving voltage corresponding to the feedback circuit 32 from the output voltage VOUT. For example, the second power supply section 82 generates a driving voltage of 15 V from the output voltage VOUT of about 30 V. The second power supply section 82 supplies the generated driving voltage to the feedback circuit 32. The feedback circuit 32 starts an operation according to the supply of the driving voltage from the second power supply section 82.

As explained above, in the power supply circuit 124, the first power supply section 81 and the second power supply section 82 are provided. Electric power is supplied to the PFC driver 30, the HB driver 31, and the control section 33, which are the control circuits on the primary side, from the first power supply section 81. Electric power is supplied to the feedback circuit 32, which is the control circuit on the secondary side, from the second power supply section 82. By dividing the power supply for the circuits on the primary side and the circuit on the secondary side in this way, it is possible to appropriately insulate the primary side and the secondary side.

In the power supply circuit 124, the HB driver 31 is connected between the capacitor 53 and the primary winding wire 55. That is, the HB driver 31 is connected to a terminal on the opposite side of a terminal connected to the reference potential of the capacitor 53. Consequently, the HB driver 31 detects the voltage of the capacitor 53. The HB driver 31 performs detection of an over output to the lighting load 12 and a short circuit of the lighting load 12 on the basis of the voltage of the capacitor 53. If the HB driver 31 detects the over output or the short circuit, the HB driver 31 stops the driving of the half bridge circuit 24. Consequently, the power supply to the secondary side is stopped and the circuit on the secondary side can be protected.

One end of the capacitor 53 is connected to the reference potential side, which is stable potential. A resonant circuit is equivalent even if C, Lp, and Lpσ are connected in series in this order from a midpoint of the half bridge circuit 24 (between the switching element 51 and the switching element 52). However, if the capacitor 53 is connected to midpoint potential, a voltage generated at both ends needs to be differentially detected. Therefore, a circuit size increases. Electric power is supplied to the HB driver 31 from the first power supply section 81. Therefore, the HB driver 31 has reference potential common to the low potential terminal 22d. Therefore, one end of the capacitor 53 is set to the reference potential and the potential at the other end of the capacitor 53 is detected, whereby it is possible to easily detect a generated voltage of the capacitor 53. For example, it is possible to reduce the number of components of the power supply circuit 124. For example, it is possible to suppress manufacturing costs of the power supply circuit 124.

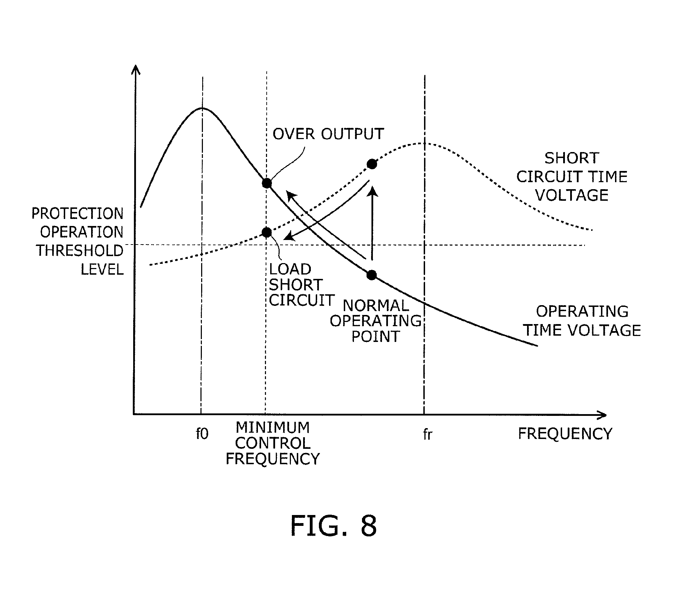

FIG. 8 is a graph schematically showing an example of the operation of the power supply circuit.

FIG. 8 schematically shows the generated voltage of the capacitor 53. The abscissa of FIG. 8 indicates a resonant frequency of the resonant circuit. The ordinate indicates a voltage generated in the capacitor 53.

As shown in FIG. 8, if an output is excessively large and if the secondary side of the transformer 25 is short-circuited, the voltage generated in the capacitor 53 increases. If the secondary side is short-circuited, Lpσ is predominant on the primary side of the transformer 25. The graph shifts from an operation curve of a resonant frequency (f0) determined by Lp and C to an operation curve of a resonant frequency (fr) determined by Lpσ and C. At this point, the voltage generated in the capacitor 53 is a root mean square value or a Peak to Peak value. The capacitor 53 performs both of a resonant operation and a direct current cut operation. Therefore, an average voltage is substantially fixed. Therefore, the HB driver 31 detects the voltage of the capacitor 53 as the root mean square value or the Peak to Peak value.

If the output voltage OUT is used for power supply to the feedback circuit 32, power supply from the second power supply section 82 is stopped and the feedback circuit 32 is also stopped if the lighting load 12 is short-circuited. Therefore, information on the secondary side cannot be provided to the primary side. Therefore, as explained above, the generated voltage of the capacitor 53 of the resonant circuit is detected. Consequently, it is possible to protect the circuit on the secondary side during a load short circuit.

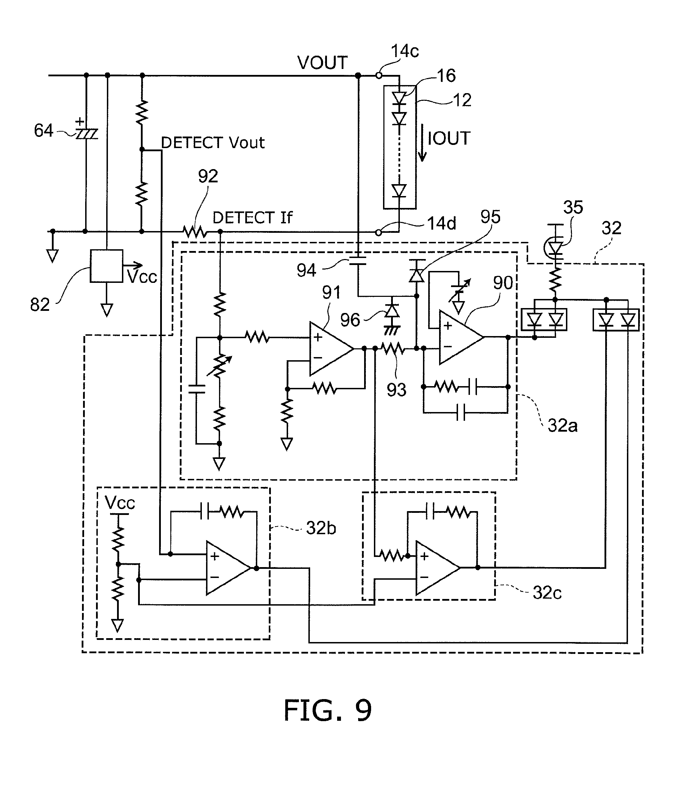

FIG. 9 is a block diagram schematically showing the feedback circuit.

As shown in FIG. 9, the feedback circuit 32 includes a feedback control section 32a, an output-voltage detecting section 32b, and an output-current detecting section 32c.

As explained above, the feedback control section 32a generates a feedback signal on the basis of the output voltage VOUT, the output current IOUT, the dimming signal, and the like and outputs the feedback signal to the HB driver 31. The HB driver 31 adjusts an output on the basis of the feedback signal such that the lighting load 12 is lit at substantially fixed brightness corresponding to a dimming degree.

If the output-voltage detecting section 32b detects an excessively large output voltage VOUT, the output-voltage detecting section 32b outputs a signal of an overvoltage to the HB driver 31. If the HB driver 31 receives the signal of the overvoltage, the HB driver 31 controls the half bridge circuit 24 such that an output is equal to or lower than a predetermined voltage. For example, the HB driver 31 controls the half bridge circuit 24 such that the output voltage VOUT is equal to or lower than 40 V.

If the output-current detecting section 32c detects an excessively large output current IOUT, the output-current detecting section 32c outputs a signal of an overcurrent to the HB driver 31. If the HB driver 31 receives the signal of the overcurrent, the HB driver 31 stops the driving of the half bridge circuit 24.

If the lighting load 12 is opened, the output voltage VOUT is excessively large. However, electric power is equal to or lower than electric power during normal time. Therefore, it is difficult to manage a threshold during an over output and a threshold during no load as one threshold using the voltage of the capacitor 53.

Therefore, the output-voltage detecting section 32b and the output-current detecting section 32c are provided in the feedback circuit 32. For example, during no load, although oscillation continues, an output is controlled to be equal to or lower than a predetermined voltage. Consequently, it is possible to guarantee a safe operation during the no load.

As shown in FIG. 9, the feedback control section 32a includes a differential amplifier circuit 90 and a non-inverting amplifier circuit 91. The output current IOUT is converted into a voltage by a resistor 92 and input to an inverting input terminal of the differential amplifier circuit 90 from the non-inverting amplifier circuit 91 at a voltage level through a resistor 93. The reference voltage is input to a non-inverting input terminal of the differential amplifier circuit 90. A feedback signal is output from an output of the differential amplifier circuit 90 to the photo coupler 35 such that a fixed voltage is applied between the terminals.

One end of a capacitor 94 is connected to the inverting input terminal of the differential amplifier circuit 90. The other end of the capacitor 94 is connected to the high-potential output terminal 14c. Consequently, a differential signal of a change in the output voltage VOUT is input to the inverting input terminal. In this way, to the inverting input terminal of the differential amplifier circuit 90, the detection signal of the output current IOUT is input and the differential signal of the change in the output voltage VOUT is input. The feedback circuit 32 feedback-controls the HB driver 31 on the basis of the detection signal of the output current IOUT and the differential signal. The capacity of the capacitor 94 is, for example, equal to or larger than 1 μF.

Protection diodes 95 and 96 are connected to the inverting input terminal of the differential amplifier circuit 90. The protection diode 95 is connected between the inverting input terminal and an output terminal of the second power supply section 82. A driving voltage of the feedback circuit 32 supplied from the second power supply section 82 is applied to one end of the protection diode 95.

The protection diode 96 is connected between the inverting input terminal and the low-potential output terminal 14d. One end of the protection diode 96 is set to the reference potential. By providing the protection diodes 95 and 96 in this way, for example, it is possible to protect the inverting input terminal of the differential amplifier circuit 90 from sudden voltage fluctuation, an overvoltage, and the like. Both the protection diodes 95 and 96 may be provided as shown in the figure or one of the protection diodes 95 and 96 may be provided.

The second power supply section 82 needs to control an output voltage to be fixed. Therefore, the second power supply section 82 outputs less response to fluctuation in an input voltage. On the other hand, if a power supply is turned off, the output of the second power supply section 82 continues for a several seconds. During this period, although a control system is operating, the output current IOUT is substantially zero. Therefore, if the power supply is turned on again during this period, the output current IOUT starts in a state in which the output current IOUT is larger than a predetermined target value. An unpleasant flash phenomenon sometimes occurs.

On the other hand, in the power supply circuit 124 according to this embodiment, the inverting input terminal and the high-potential output terminal 14c are connected by the capacitor 94, whereby a differential signal of a change in the output voltage VOUT is input to the inverting input terminal. Consequently, even during a restart, a voltage is supplied to the inverting input terminal in response to fluctuation in the output voltage VOUT. Consequently, it is possible to suppress occurrence of a flash during the power supply restart. In this way, in the power supply circuit 124 and the luminaire 120 according to this embodiment, it is possible to obtain a stable operation.

Fourth Embodiment

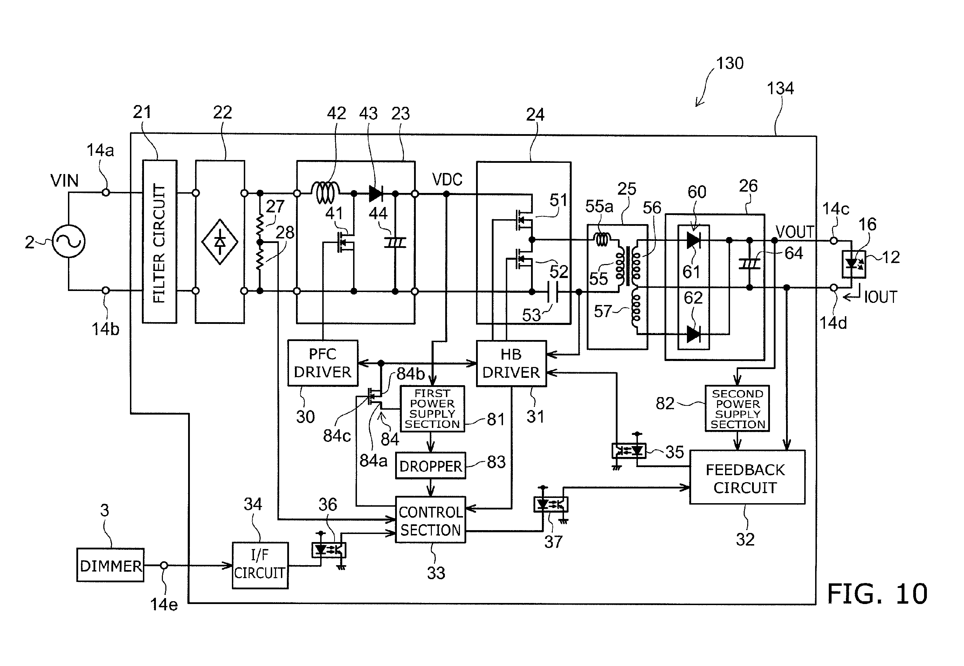

FIG. 10 is a block diagram schematically showing a luminaire according to a fourth embodiment.

As shown in FIG. 10, a power supply circuit 134 of a luminaire 130 further includes a switching element 84. The switching element 84 includes electrodes 84a to 84c. The electrode 84a is connected to the first power supply section 81. The electrode 84b is connected to the PFC driver 30 and the HB driver 31. The electrode 84c is connected to the control section 33. The electrode 84c is a control electrode and controls an electric current flowing between the electrode 84a and the electrode 84b. The control section 33 controls ON and OFF of the switching element 84. That is, the control section 33 controls power supply to the PFC driver 30 and the HB driver 31 and a stop of the power supply.

In the power supply circuit 134, when the input voltage VIN is supplied from the alternating-current power supply 2, the first power supply section 81 is driven. The control section 33 starts an operation according to power supply from the first power supply section 81. At this point, the PFC driver 30 does not start an operation yet. Therefore, for example, a voltage obtained by smoothing a rectified voltage by the rectifying circuit 22 with the capacitor 44 is supplied to the first power supply section 81.

When the control section 33 starts an operation according to power supply from the first power supply section 81, the control section 33 transitions the switching element 84 from an OFF state to an ON state. Consequently, electric power is supplied to the PFC driver 30 and the HB driver 31. The PFC driver 30 and the HB driver 31 start operations.

Timings for supplying the electric power to the PFC driver 30 and the HB driver 31 are substantially the same. On the other hand, in the HB driver 31, a delay due to a capacitor on an output side occurs. Therefore, the PFC driver 30 starts the operation earlier than the HB driver 31. In this way, timing for staring the operation of the PFC driver 30 is earlier than timing for starting the operation of the HB driver 31.

The timing for starting the operation of the PFC driver 30 and the timing for starting the operation of the HB driver 31 may be substantially the same. The timing for starting the operation of the HB driver 31 may be set to be earlier than the timing for starting the operation of the PFC driver 30. However, as explained above, the timing for starting the operation of the PFC driver 30 is set to be earlier than the timing for starting the operation of the HB driver 31. That is, after the power-factor improving circuit 23 changes to a predetermined operation state and the direct-current voltage VDC is decided, the operation of the half bridge circuit 24 is started. Consequently, it is possible to suppress, for example, occurrence of an abnormal output current IOUT. It is possible to further stabilize the operation of the power supply circuit 134.

For example, a switching element configured to control power supply to the PFC driver 30 and a switching element configured to control power supply to the HB driver 31 may be provided to enable the control section 33 to individually control power supply to the PFC driver 30 and power supply to the HB driver 31. Consequently, it is possible to more appropriately control operation timings of the PFC driver 30 and the HB driver 31.

A detection voltage of the input voltage VIN is input to the control section 33 via the resistors 27 and 28. The control section 33 detects a voltage value of the input voltage VIN on the basis of the detection voltage. If the input voltage VIN is equal to or smaller than a predetermined value, the control section 33 turns off the switching element 84 and stops the power supply to the PFC driver 30 and the HB driver 31. If the input voltage VIN is larger than the predetermined value, the control section 33 turns on the switching element 84 and supplies electric power to the PFC driver 30 and the HB driver 31.

When the supply of the input voltage VIN is stopped by power off, the control section 33 stops the power supply to the PFC driver 30 and the HB driver 31. Consequently, it is possible to suppress an abnormal flash from occurring during the power off because of, for example, charges accumulated in the capacitor.

If a dimming signal input from the dimmer 3 is equal to or smaller than a predetermined value, the control section 33 turns off the switching element 84 and stops the power supply to the PFC driver 30 and the HB driver 31. For example, if a dimming degree is set to be equal to or lower than 5%, the control section 33 stops the power supply to the PFC driver 30 and the HB driver 31. In this way, the control section 33 controls the power supply to the PFC driver 30 and the HB driver 31 according to an input of a control signal. The control signal is not limited to the dimming signal and may be an arbitrary signal concerning the control of the output voltage VOUT.

An abnormality detection signal indicating an abnormality of an output is input to the control section 33. The abnormality detection signal is, for example, a signal indicating an abnormality of at least one of the output voltage VOUT and the output current IOUT. In this example, the abnormality detection signal is input to the control section 33 from the HB driver 31. The HB driver 31 inputs, for example, a detection result of an over output and a short circuit based on the voltage of the capacitor 53 to the control section 33 as the abnormality detection signal.

The control section 33 turns off the switching element 84 according to the input of the abnormality detection signal and stops the power supply to the PFC driver 30 and the HB driver 31. That is, in the power supply circuit 134, if the HB driver 31 detects an over output or an output short circuit, the HB driver 31 stops the driving of the half bridge circuit 24. The abnormality detection signal is input to the control section 33. According to the input of the abnormality detection signal, the power supply to the PFC driver 30 and the HB driver 31 is stopped. In this way, if a circuit protecting function by the HB driver 31 works, the control section 33 stops the power supply to the PFC driver 30 and the HB driver 31.

In this way, if the power supply circuit 134 shifts to a standby state for stopping the output on the basis of the dimming signal or the abnormality detection signal, the control section 33 stops the power supply to the PFC driver 30 and the HB driver 31. Consequently, it is possible to suppress a power loss in the standby state.

The abnormality detection signal is not limited to be input from the HB driver 31. The abnormality detection signal may be input to the control section 33 from the feedback circuit 32 or the like. For example, the control section 33 may stop the power supply to the PFC driver 30 and the HP driver 31 on the basis of abnormalities of the output voltage VOUT and the output current IOUT detected by the feedback circuit 32.

As explained above, in the power supply circuit 134 and the luminaire 130 according to this embodiment, it is possible to obtain a stable operation.

Fifth Embodiment

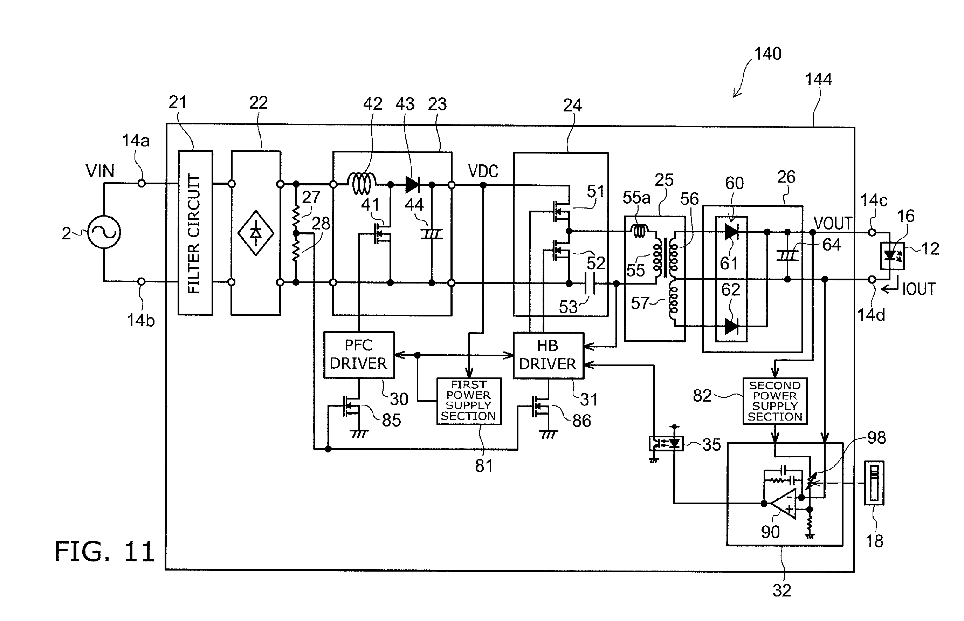

FIG. 11 is a block diagram schematically showing a luminaire according to a fifth embodiment.

As shown in FIG. 11, an operating section 18 is provided in a luminaire 140. The operating section 18 is provided to be exposed on the outer surface of the luminaire 140. The operating section 18 is, for example, a slide lever. The operating section 18 may be a rotary switch or the like. In a power supply circuit 144 of the luminaire 140, a variable resistor 98 is provided in the feedback circuit 32. The variable resistor 98 is connected to a non-inverting input terminal of the differential amplifier circuit 90. The variable resistor 98 is physically connected to the operating section 18 and changes a resistance value in association with operation of the operating section 18.

In the power supply circuit 144, a voltage value of a reference voltage input to the differential amplifier circuit 90 changes according to the operation of the operating section 18. In the power supply circuit 144, the control section 33, the I/F circuit 34, and the like are omitted. The power supply circuit 144 is not connected to the dimmer 3. That is, in the luminaire 140, dimming control can be performed according to the operation of the operating section 18.

In the luminaire 140 and the power supply circuit 144, the components such as the power-factor improving circuit 23, the half bridge circuit 24, the transformer 25, the rectifying and smoothing circuit 26, the PFC driver 30, the HB driver 31, and the feedback circuit 32 are the same as those in the embodiments explained above. Therefore, in the luminaire 140 and the power supply circuit 144, it is possible to obtain effects same as the effects in the embodiments.

The power supply circuit 144 further includes switching elements 85 and 86. The switching element 85 is connected to the PFC driver 30. The switching element 86 is connected to the HB driver 31. A detection voltage of the input voltage VIN is input to control electrodes of the respective switching elements 85 and 86 via the resistors 27 and 28.

If the input voltage VIN is equal to or larger than a predetermined value, the switching element 85 is turned on. The PFC driver 30 detects the input voltage VIN according to the turn-on of the switching element 85. If the input voltage VIN is equal to or larger than the predetermined value, the switching element 86 is turned on. The HB driver 31 detects the input voltage VIN according to the turn-on of the switching element 86.

If the input voltage VIN is equal to or larger than the predetermined value, the PFC driver 30 starts control of the power-factor improving circuit 23. If the input voltage VIN is equal to or larger than the predetermined value, the HB driver 31 starts control of the half bridge circuit 24. Consequently, in the power supply circuit 144, as in the embodiments, it is possible to control timing for starting the operation of the PFC driver 30 and timing for starting the operation of the HB driver 31.

For example, timing for turning on the switching element 85 is set to be earlier than timing for turning on the switching element 86 by adjusting a gate voltage or the like. Consequently, it is possible to set the timing for starting the operation of the PFC driver 30 to be earlier than the timing for starting the operation of the HB driver 31. As explained above, it is possible to further stabilize the operation of the power supply circuit 144.

The embodiments are explained above with reference to the specific examples. However, the present invention is not limited to the embodiments. Various modifications of the embodiments are possible.

The illumination light source 16 is not limited to the LED and may be, for example, an organic EL (Electro-Luminescence) and an OLED (Organic light-emitting diode). A plurality of the illumination light source 16 may be connected to the lighting load 12 in series or in parallel.

In the embodiments, the half bridge circuit 24 including the two switching elements 51 and 52 is explained as the bridge circuit. However, the bridge circuit is not limited to this and may be, for example, a full bridge circuit including four switching elements.

In the embodiments, the lighting load 12 is explained as the direct-current load. However, the direct-current load is not limited to this and may be other direct-current loads such as a heater. In the embodiments, the power supply circuit 14 used in the luminaire 10 is explained as the power supply circuit. However, the power supply circuit is not limited to this and may be an arbitrary power supply circuit corresponding to the direct-current load.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A power supply circuit (14, 104, 114, 124, 134, 144) comprising:

   a bridge circuit (24) including at least one switching element (51, 52) and configured to convert a direct-current voltage into an alternating-current voltage according to ON and OFF of the switching element (51, 52);
   a transformer (25) including a primary winding wire (55) connected to the bridge circuit (24) and a secondary winding wire (56, 57) magnetically coupled to the primary winding wire (55); and
   a rectifying and smoothing circuit (26) configured to convert the alternating-current voltage output from the secondary winding wire (56, 57) into a direct-current output voltage and supply the direct-current output voltage to a direct-current load (12), wherein
   when a number of turns of the primary winding wire (55) is represented as N1, a number of turns of the secondary winding wire (56, 57) is represented as N2, a voltage value of the direct-current voltage supplied to the bridge circuit (24) is represented as VDC, and a lower limit value of the output voltage is represented as Vmin, a turn ratio of the primary winding wire (55) and the secondary winding wire (56, 57) is about N1:N2=(VDC/2):Vmin.

2. The circuit (14, 104, 114, 124, 134, 144) according to claim 1, further comprising a first driver (31) configured to control ON and OFF of the switching element (51, 52), wherein
   the bridge circuit (24) includes a capacitor (53) connected to the primary winding wire (55) in series,
   the transformer (25) includes a leak inductance (55a),
   in the bridge circuit (24) and the transformer (25), the leak inductance (55a), inductance of the primary winding wire (55), and the capacitor (53) form a series resonant circuit, and
   the first driver (31) controls a switching frequency of the switching element (51, 52) to thereby control the output voltage.

3. The circuit (14, 104, 114, 124, 134, 144) according to claim 2, wherein, when the inductance of the primary winding wire (55) is represented as Lp and the leak inductance (55a) of the transformer (25) is represented as Lpσ, a value of a coupling coefficient represented by $\sqrt{(1-Lp\sigma/Lp)}$ is equal to or larger than 0.8 and equal to or smaller than 0.9.

4. The circuit (14, 104, 114, 124, 134, 144) according to any one of claims 1 to 3, wherein
   the rectifying and smoothing circuit (26) includes a rectifying element (61, 62) configured to rectify the alternating-current voltage output from the secondary winding wire (56, 57), and
   the rectifying element (61, 62) is a Schottky barrier diode.

5. The circuit (14, 104, 114, 124, 134, 144) according to claim 4, wherein the rectifying and smoothing circuit (26) includes a rectifying circuit (60) in which a pair of the rectifying elements (61, 62) are provided in one package.

6. The circuit (14, 104, 114, 124, 134, 144) according to claim 4 or 5, further comprising a substrate (74) and a thermal radiator (76), wherein

the substrate (74) includes a first surface (74a) and a second surface (74b) on an opposite side of the first surface (74a),

the transformer (25) is provided on the first surface (74a), the rectifying element (61, 62) is provided on the second surface (74b) and arranged in a position opposed to the transformer (25), and

the thermal radiator (76) is thermally coupled to at least one of the transformer (25) and the rectifying element (61, 62).

7. The circuit (14, 104, 114, 124, 134, 144) according to any one of claims 1 to 6, wherein
   the transformer (25) includes a bobbin (70) and a core (72) having an asymmetrical shape, and
   the bobbin (70) includes:

   a primary-side winding section (70a) in which the primary winding wire (55) is provided;
   a secondary-side winding section (70b) in which the secondary winding wire (56, 57) is provided; and
   a barrier section (70c) provided between the primary-side winding section (70a) and the secondary-side winding section (70b) and configured to separate the primary-side winding section (70a) and the secondary-side winding section (70b).

8. A luminaire (10, 100, 110, 120, 130, 140) comprising:

   a lighting load (12); and
   the power supply circuit (14, 104, 114, 124, 134, 144) according to any one of claims 1 to 7 configured to supply electric power to the lighting load (12).

FIG. 1

$$f0 = \frac{1}{2\pi\sqrt{L_P \cdot C}} \quad, \qquad fr = \frac{1}{2\pi\sqrt{L_P \sigma \cdot C}}$$

FIG. 2

FIG. 3A

FIG. 3B

FIG. 3C

| BOBBIN PRIMARY SIDE | BOBBIN SECONDARY SIDE | GAP POSITION |
|---|---|---|
| SHORT CORE | LONG CORE | SHORT CORE |
| | | LONG CORE |
| | | BOTH GAPS |
| LONG CORE | SHORT CORE | SHORT CORE |
| | | LONG CORE |
| | | BOTH GAPS |

60(61,62)    76

75

74b

74

25    74a

# FIG. 4A

25    76

75

74b

74

74a

60(61,62)

# FIG. 4B

FIG. 5

EP 2 863 708 A2

FIG. 6

FIG. 7

EP 2 863 708 A2

FIG. 8

FIG. 9

FIG. 10

EP 2 863 708 A2

FIG. 11